# EUROPEAN PATENT APPLICATION

(11) **EP 1 677 050 A2**
(43) Date of publication of application: **05.07.2006**
(21) Application number: 05256382.2
(22) Date of filing: 13.10.2005
(51) Int. Cl.: F23R 3/00, F02K 1/82

(54) **Augmentor liner**

(30) Priority: 29.12.2004 US 25402
(71) Applicant: UNITED TECHNOLOGIES CORPORATION, Hartford, CT 06101 (US)
(72) Inventor: Prasad, Dilip, Vernon, CT 06066 (US); Proscia, William, Marlborough, CT 06447 (US); Feng, Jinzhang, Avon, CT 06001 (US)
(74) Representative: Leckey, David Herbert

(57) **Abstract**

An augmentor liner (10) is provided that includes an annulus (22) disposed between a first wall (18) and a second wall (20), and a plurality of baffles (34). The first wall (18) is disposed radially inside of the second wall (20). The plurality of baffles (34) extend heightwise between the first wall (18) and the second wall (20), and are circumferentially spaced apart from one another by a distance (40). The distance (40) between adjacent baffles (34) is such that an acoustic wave (42) entering an annulus compartment will travel between the first wall (18) and second wall (20) in a direction having a radial component that is substantially greater than a circumferential component. The baffle spacing (40) may alternatively be described as being such that the circumferential component of the acoustic wave is substantially damped and therefore does not materially contribute to undesirable screech.

## Description

### BACKGROUND OF THE INVENTION

### 1. Technical Field

This invention applies to augmented gas turbine engines in general, and to augmentor liners in particular.

### 2. Background Information

The effectiveness of gas turbine engines employed in many high-performance applications is greatly enhanced by an augmentor that produces additional thrust on demand. Gas flow exiting the turbine portion of the engine and bypass air flow combine (the combination is referred to herein as "core gas flow") and pass within the passage formed by the augmentor liner. When the augmentor is in operation, fuel is injected into the core gas flow and ignited. The combustion products and the remaining core gas flow is subsequently discharged to the atmosphere through a variable-area nozzle.

A significant impediment to the operability of an augmentor is the occurrence of screech, which is a thermoacoustic instability, the mechanism of which can be understood as follows. The internal volume of the augmentor acts as a resonator and supports multiple acoustic modes. The temporal pressure oscillations associated with these modes bring about fluctuations in the heat released by the flame. The transient heat release, in turn, creates pressure perturbations. When the unsteady pressure and heat release are appropriately phased, the oscillation can grow to large amplitudes and, if unchecked, can result in structural and/or thermal, failure owing to the excessively large vibratory and heat loads that are induced. The occurrence of screech in an augmentor is usually associated with a single acoustic mode of the augmentor system, which exhibits a standing-wave behavior in the axial direction and a travelling-wave behavior in a circumferential direction.

What is needed, therefore, is an augmentor component that makes the augmentor less susceptible to undesirable screech.

### DISCLOSURE OF THE INVENTION

According to the present invention, an augmentor liner is provided. The liner includes an annulus disposed between a first wall and a second wall, and a plurality of baffles. The first wall is disposed radially inside of the second wall. The plurality of baffles extend heightwise between the first wall and the second wall, and are circumferentially spaced apart from one another by a distance. The distance between adjacent baffles is such that an acoustic wave entering an annulus compartment will travel between the first wall and second wall in a direction having a radial component that is substantially greater than a circumferential component. Alternatively, the distance between adjacent baffles may be described as being such that the circumferential component of an acoustic wave traveling within an annulus compartment is substantially damped and therefore does not materially contribute to screech.

An advantage of the present invention is that undesirable screech is minimized or eliminated. The acoustic pressure waves that create screech are damped by the present invention augmentor liner. Consequently, undesirable screech is minimized or eliminated.

These and other objects, features and advantages of the present invention will become apparent in light of the detailed description of preferred embodiments thereof, as illustrated in the accompanying drawings.

### BRIEF DESCRIPTION OF THE DRAWINGS

FIG. 1 is a diagrammatic view of a vectoring turbine exhaust nozzle that includes an augmentor liner shown in a straight configuration.
FIG. 2 is a diagrammatic view of a vectoring turbine exhaust nozzle that includes an augmentor liner shown in an angled configuration.
FIG. 3 is a diagrammatic perspective view of an augmentor liner segment, partially broken to show a baffle.
FIG. 4 is a diagrammatic end view of an augmentor liner segment.
FIG. 5 is a diagrammatic perspective view of an augmentor liner segment with a wall removed.
FIG. 6 is a diagrammatic view of a liner compartment, illustrating an acoustic pressure wave traveling therein.
FIG.7 diagrammatically illustrates an extended length passage through a baffle.

### DETAILED DESCRIPTION OF THE INVENTION

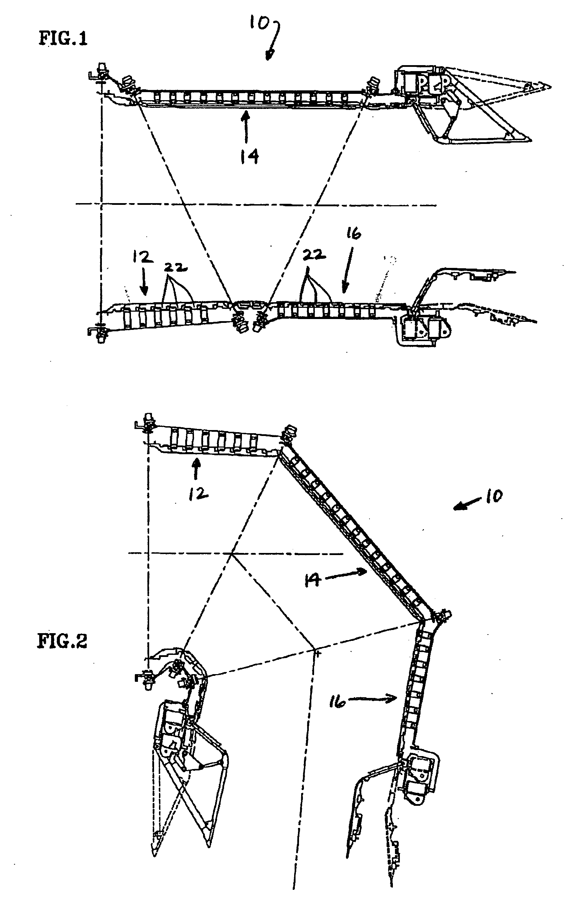

The present invention augmentor liner 10 can be used within a variety of different types of augmentors. In FIGS. 1 and 2, an embodiment of the augmentor liner 10 is shown employed within a vectoring turbine exhaust nozzle. The nozzle includes a forward section 12, an intermediate section 14 and an aft section 16. In a first configuration shown in FIG. 1, the nozzle sections 12, 14, 16 are disposed in a manner such that the turbine exhaust nozzle is substantially linear. In a second configuration shown in FIG. 2, the forward and aft sections 12, 16 are rotated approximately one hundred and eighty degrees (180°) relative to the intermediate section 14. As a result, the turbine exhaust nozzle turns approximately ninety degrees (90°).

The augmentor liner 10 embodiment shown in FIGS. 1 and 2 is substantially cylindrical. To facilitate the description of the augmentor liner 10 herein, the augmentor liner 10 will be described as being cylindrical. The present invention augmentor liner 10 is not, however, limited to cylindrical configurations.

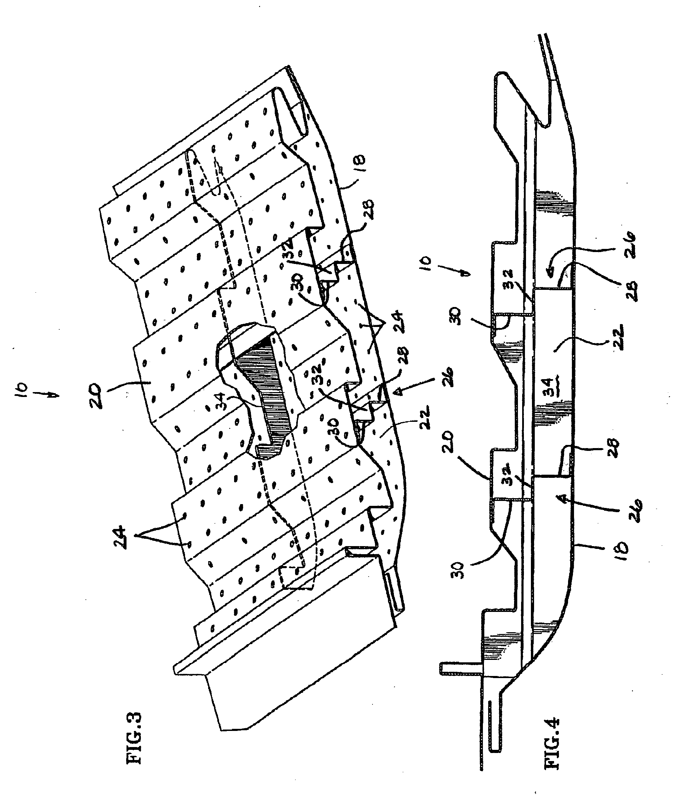

Referring to FIGS. 3 and 4, the augmentor liner 10 includes a first wall 18 and a second wall 20 separated from one another thereby forming an annular region 22 that is the interior region between the first wall 18 and the second wall 20. The first wall 18 is disposed radially inside of the second wall 20. The first wall 18 and the second wall 20 each include a plurality of apertures 24 for the passage of cooling air into and out of the annulus 22.

Now referring to FIGS. 3 - 5, in some embodiments the present invention liner 10 includes a plurality of radially expandable bands 26, each of which extends circumferentially within the annulus 22. The bands 26 are axially spaced apart from one another. The bands 26 are configured to accommodate movement between the first wall 18 and the second wall 20. In some instances, for example, the first wall 18 may experience significantly higher heat transfer than the second wall 20. In such an instance, the first wall 18 may thermally expand in a radial direction an amount greater than that of the second wall 20. The radially expandable bands 26 accommodate the change in relative radial position of the first and second walls 18, 20. In a preferred configuration, each band 26 includes a first portion 28 attached to the first wall 18, a second portion 30 attached to the second wall 20 and an intermediate portion 32 connected to the first and second portions 28, 30. The intermediate portion 32 is substantially disposed along a plane that intersects the plane of the first portion 28 and the plane of the second portion 30. For example, the configuration may assume a "Z" shape, or the intermediate portion 32 may be substantially perpendicular to one or both of the first and second portions 28, 30, or the like (e.g., the intermediate portion 32 may extend in a direction approximately parallel to the axial centerline). The preferred configuration accommodates radial and axial relative movement of the walls 18, 20.

The bands 26 form circumferentially extending compartments that inhibit axial cooling air travel within the annulus 22. The circumferentially extending compartments may extend around all or a portion of the circumference of the duct. In the embodiment shown in FIGS. 1 and 2, the circumferentially extending compartments within the forward, intermediate and aft nozzle sections 12, 14, 16 extend around a portion of the circumference of the liner 10.

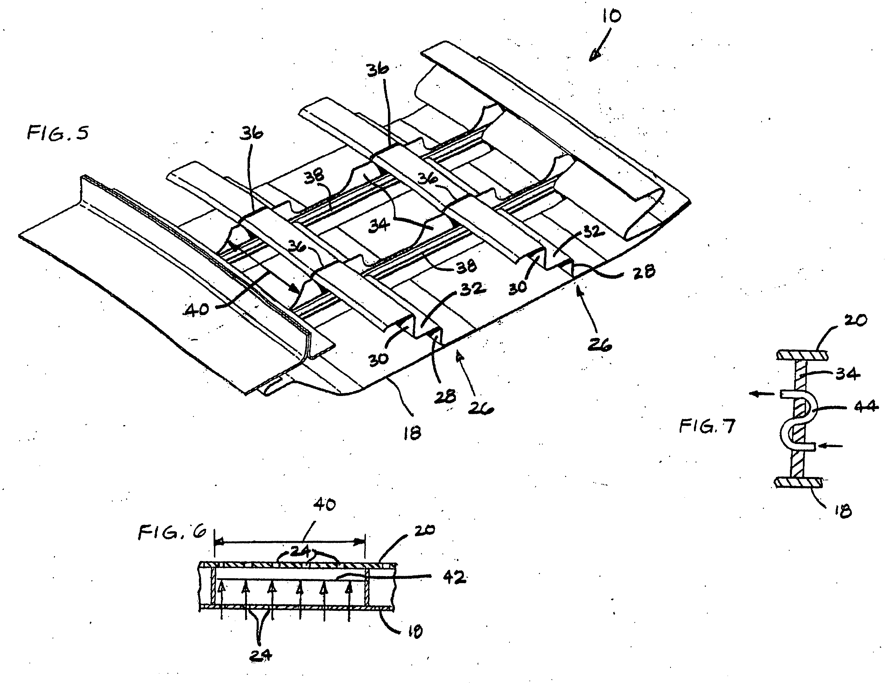

Referring to FIGS. 3 - 6, the annulus is further compartmentalized using baffles 34 that extend between adjacent bands 26. The baffles 34 extend heightwise between the first and second walls 18, 20, and lengthwise between adjacent bands 26. In some embodiments, each baffle 34 is attached to one of the first or second wall 18, 20. In the embodiment shown in FIG. 5, the baffles 34 extend lengthwise across a plurality of bands 26, nested within slots 36 disposed in the bands 26. In this embodiment, the bands 26 and the baffles 34 are substantially orthogonally arranged. Movement of the baffles 34 is substantially prevented by the bands 26. In some instances, a baffle 34 may include a lengthwise extending feature 38 (e.g., rib, corrugation, etc.) that increases the lengthwise stiffness of the baffle 34. (See FIG. 4). The annular liner compartments formed within the liner annulus 22 extend between the first wall 18, the second wall 20, adjacent baffles 34, and adjacent bands 26.

In certain embodiments, as an alternative to the orthogonal arrangement of bands 26 and baffles 34 described above, the baffles 34 may extend in an axially skewed direction, taking the form of a helix for example. The baffles 34 may also extend between the first wall 18 and the second wall 20 in a direction skewed from the radial direction.

The circumferential spacing of the baffles 34 i.e., the circumferential distance between adjacent baffles 34 is chosen to produce advantageous damping of acoustic pressure waves produced within the augmentor during operation. Specifically, the distance 40 between adjacent baffles 34 is chosen so that the portion of an acoustic pressure wave entering an annular liner compartment under normal operating conditions will travel between the first wall 18 and second wall 20 in a direction having a radial component that is substantially greater than a circumferential component. FIG. 6 diagrammatically illustrates an acoustic pressure wave 42 traveling within a liner compartment in such a direction. The wave 42 experiences advantageous damping, which in turn lessens the magnitude of pressure disturbances that lead to undesirable screech. The baffle spacing may alternatively be described as being such that the circumferential component of the acoustic wave is substantially damped and therefore does not materially contribute to undesirable screech.

The acoustic pressure waves present in an augmentor assume the form of a traveling or spinning wave, which includes axial and azimuthal components. The wave, which is periodic around the circumference of the liner, can be written mathematically in the form:

Cos(ω*t* + *m*θ)

where θ represents the azimuthal coordinate, ωthe frequency, and *m* the circumferential mode order. For the screech modes, the mode order value (m) is typically between 1 and 3 so that its wavelength in the circumferential direction is large.

The specific spacing between adjacent baffles 34 is chosen based upon the application at hand. Our finding is that desirable acoustic pressure wave damping can be attained by circumferentially implementing at least two times as many baffles 34 as the circumferential mode order value. For example, if an augmentor application experienced undesirable acoustic pressure waves having a circumferential mode order of two (2), desirable acoustic wave damping could be attained by implementing at least four (4) baffles 34 spaced around the circumference of the augmentor liner 10. Our fmding indicates that it is preferable, however, to have a number of baffles 34 greater than two (2) times the circumferential mode order number. The number of baffles 34 is typically limited, however, by the weight and cost associated with adding the baffles 34. A range of between two (2) and eight (8) times the circumferential mode order value typically provides advantageous acoustic wave damping with minimal adverse consequence. The inter-baffle spacing around the circumference of the liner 10 may be uniform or non-uniform depending upon the application.

Now referring to FIG. 7, in some embodiments additional acoustic wave damping is provided by including extended length passages 44 between adjacent compartments, through the baffle 34 disposed therebetween. In FIG. 7, for example, an extended length passage is shown extending through a baffle 34, connecting adjacent annular liner compartments. Acoustic pressure waves having a circumferential travel component, will enter the extended length passage 44 and be damped during passage therethrough. Consequently, the acoustic pressure wave traveling through the extended length passage will not contribute significantly to screech amplitude, if at all. The length of the extended length passage can be varied to suit the application at hand, and in all cases is long enough to provide damping of the acoustic pressure wave traveling therethrough.

In some embodiments, additional acoustic wave damping is provided by using permeable baffles 34. Acoustic pressure waves having a circumferential travel component will pass through the permeable baffle 34 and be damped. Consequently, the acoustic pressure wave will contribute to screech amplitude less than it would otherwise, if at all.

Although this invention has been shown and described with respect to the detailed embodiments thereof, it will be understood by those skilled in the art that various changes in form and detail thereof may be made without departing from the scope of the invention. For example, the present invention is described as including circumferentially extending bands 26 and baffles 34 extending therebetween. In some applications, it may be sufficient to use the baffles 34 without the bands 26, provided the baffles 34 are numbered and circumferentially spaced in the manner described.

## Claims

1. An augmentor liner (10) having an axial centerline and a circumference, comprising:
an annulus (22) disposed between a first wall (18) and a second wall (20), the annulus extending along the axial centerline, wherein the first wall (18) is disposed radially inside of the second wall (20);
a plurality of bands (26), each circumferentially extending within the annulus (22) and axially spaced apart from one another, wherein the bands (26) are attached to the first wall (18) and to the second wall (20) and are operable to accommodate relative position change between the first wall (18) and second wall (20); and
a plurality of baffles (34) extending lengthwise between adjacent bands (26) and heightwise between the first wall (18) and the second wall (20), wherein the baffles (34) are circumferentially spaced apart from one another by a distance (40), wherein the distance (40) between adjacent baffles (34) is such that an acoustic wave (42) entering an annulus compartment will travel between the first wall (18) and second wall (20) in a direction having a radial component that is substantially greater than a circumferential component.

2. An augmentor liner (10) operable to accommodate acoustic pressure waves (42) that cause screech during operation, the acoustic pressure waves (42) having a circumferential mode order number, the liner comprising:
an annulus (22) disposed between a first wall (18) and a second wall (20), the annulus (22) extending along an axial centerline, wherein the first wall (18) is disposed radially inside of the second wall (20);
a plurality of bands (26), each circumferentially extending within the annulus (22) and axially spaced apart from one another, wherein the bands (26) are attached to the first wall (18) and to the second wall (20) and are operable to accommodate relative position change between the first wall (18) and second wall (20); and
a plurality of baffles (34) extending lengthwise between adjacent bands (26) and heightwise between the first wall (18) and the second wall (20), wherein a number of baffles (34) are circumferentially spaced apart by substantially equal distances (40) from one another, wherein the number of baffles (34) is equal to two or eight, or some number therebetween, times the circumferential mode order number.

3. The augmentor liner of claim 1 or 2, wherein the radially expandable bands (26) include slots (36), and the baffles (34) are disposed within the slots (36).

4. The augmentor liner of claim 1, 2 or 3 wherein the baffles (34) extend lengthwise substantially parallel to the axial centerline.

5. The augmentor liner of claim 1, 2 or 3 wherein the baffles (34) extend in an axially skewed direction.

6. The augmentor liner of any preceding claim, wherein the baffles (34) and the bands (26) are substantially orthogonally arranged.

7. The augmentor liner of any preceding claim, wherein the distance (40) between plurality of baffles (34) is uniform.

8. The augmentor liner of any preceding claim wherein the baffles (34) extend between the first wall (18) and the second wall (20) in a direction skewed from the radial direction.

9. The augmentor liner any preceding claim, wherein the baffles (34) comprise a permeable material.

10. An augmentor liner (10) having an axial centerline and a circumference, comprising:
an annulus (22) disposed between a first wall (18) and a second wall (20), the annulus (22) extending along the axial centerline, wherein the first wall (18) is disposed radially inside of the second wall (20);
a plurality of baffles (34) extending heightwise between the first wall (18) and the second wall (20), wherein the baffles (34) are circumferentially spaced apart from one another by a distance (40), wherein the distance (40) between adjacent baffles (34) is such that an acoustic wave (42) entering an annulus compartment will travel between the first wall (18) and second wall (20) in a direction having a radial component that is substantially greater than a circumferential component.

11. An augmentor liner (10) having an axial centerline and a circumference, comprising:
an annulus (22) disposed between a first wall (18) and a second wall (20), the annulus (22) extending along the axial centerline, wherein the first wall (18) is disposed radially inside of the second wall (20);
a plurality of bands (26), each circumferentially extending within the annulus (22) and axially spaced apart from one another, wherein the bands (26) are attached to the first wall (18) and to the second wall (20); and
a plurality of baffles (34) each having a thickness, the baffles (34) extending lengthwise between adjacent bands (26) and heightwise between the first wall (18) and the second wall (20), wherein substantially all of the baffles (34) include one or more passages having an extended length passage (44) operable to damp acoustic pressure waves.
